(19) Europäisches Patentamt
European Patent Office
Office européen des brevets

(11) Veröffentlichungsnummer: **0 002 821**
**B1**

(12) **EUROPÄISCHE PATENTSCHRIFT**

(45) Veröffentlichungstag der Patentschrift: **23.06.82**

(21) Anmeldenummer: **78101825.4**

(22) Anmeldetag: **22.12.78**

(51) Int. Cl.[3]: **C 07 F 9/15**, C 07 F 9/21, C 08 K 5/51, C 10 M 1/44

(54) **Cyclische Phosphite und mit deren Hilfe stabilisiertes organisches Material.**

(30) Priorität: **03.01.78 US 866748**

(43) Veröffentlichungstag der Anmeldung: **11.07.79 Patentblatt 79/14**

(45) Bekanntmachung des Hinweises auf die Patenterteilung: **23.06.82 Patentblatt 82/25**

(84) Benannte Vertragsstaaten: **DE FR GB**

(56) Entgegenhaltungen:
**FR - A - 1 481 912**

**CHEMICAL ABSTRACTS, Vol. 68 Zusammenfassung Nr. 12597s, 1968, Columbus, Ohio, USA. L. V. VERIZHNIKOV et al.: "Synthesis of esters of 0,0'-biphenylylene-phosphorus acid", Seite 1190, rechte Spalte**

(73) Patentinhaber: **CIBA-GEIGY AG**
**Patentabteilung Postfach**
**CH-4002 Basel (CH)**

(72) Erfinder: **Spivack, John D.**
**1 Blue Jay Street**
**Spring Valley New York 10977 (US)**

(56) Entgegenhaltungen:
**CHEMICAL ABSTRACTS, Vol. 73, Zusammenfassung Nr. 15657a, 1970, Columbus, Ohio, USA. P. A. KIRPICHNIKOV et al.: "Phosphorus acid esters as colorless stabilizers of low-pressure polyethylene", Seite 30, linke Spalte**

**CHEMICAL ABSTRACTS, Vol. 75, Zusammenfassung Nr. 130242q, 1971, Columbus, Ohio, USA. L. V. VERIZHNIKOV et al.: "0,0'-Biphenylylenephosphorous acid esters as stabilizers for poly(vinyl chloride)", Seite 6, linke Spalte**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 002 821 B1

(56) Entgegenhaltungen:

**CHEMICAL ABSTRACTS, Vol. 79, Zusammenfassung Nr. 127076r, 1973, Columbus, Ohio, USA. V. A. PANOV et al.: "Styrene-acrylonitrile copolymers", Seite 21, linke Spalte**

**CHEMICAL ABSTRACTS, Vol. 82, Zusammenfassung Nr. 73922e, 1975, Columbus, Ohio, USA. V. A. PANOV et al.: "Colorless styrene-acrylonitrile copolymer", Seite 34, rechte Spalte**

**DERWENT SOVIET INVENTIONS ILLUSTRATED, Sektion C, Petrochemicals, Seite 3, 1971**

Cyclische Phosphite und mit deren Hilfe stabilisiertes organisches Material

Organische Polymere wie Kunststoffe, Harze, Schmier- und Mineralöle sind dem thermischen und oxidativen Abbau, sowie der Zersetzung durch Licht unterworfen. Es sind eine grosse Anzahl Stabilisatoren für die verschiedenen Substrate bekannt. Ihre Wirksamkeit ist abhängig sowohl von den Ursachen der Zersetzung als auch von der Art des stabilisierten Substrates. Es wurde festgestellt, dass Stabilisatoren, welche wirksame Langzeit-Antioxidantien sind, relativ unwirksam in Prozessen sind, wo die thermische Stabilisierung des Substrates für kurze Zeit, aber bei realtiv hohen Temperaturen gewünscht wird. Viele Stabilisatoren sind unverträglich mit dem Substrat, das Probleme verursachen kann und verringert auch ihre Wirksamkeit. Bei manchen Stabilisatoren erlaubt ihre Leichtflüchtigkeit oder ihre thermische bzw. hydrolytische Unbeständigkeit den praktischen Einsatz nicht.

Die Phosphite der vorliegenden Erfindung besitzen eine ungewöhnliche Kombination der gewünschten Eigenschaften gegenüber dem Stand der Technik. Dadurch sind diese Phosphite besonders wirksam und brauchbar als Stabilisatoren. Der Stand der Technik beschreibt sterisch ungehinderte, 2,2'-Biphenylen-phenyl-phosphite und 2,2'-Methylen-bis-(dialkylphenyl)-phenylphosphite: C.A. *68*, 12 597 q (1968), C.A. *73*, 15 657 a (1970), C.A. *75*, 130 242 q (1971), FR—Pat. 1 481 912 und SU-Erfindungsscheine Nr. 378,389 und 429,070. Diese Verbindungen sind als Stabilisatoren für verschiedene Polymere beschrieben worden.

Die Phosphite der gegenwärtigen Erfindung zeigen gegenüber den 2,2'-Methylen-bis-(dialkyl)-phenylphosphiten gemäss SU-Erfinderschein 429,070 eine überraschend bessere Wirksamkeit, insbesondere als Verarbeitungsstabilisatoren für Polyolefine.

Die vorliegende Erfindung betrifft alkylierte 2,2'-Biphenylen-phosphite und mit deren Hilfe stabilisiertes organisches Material. Insbesondere betrifft es Phosphite der Formel

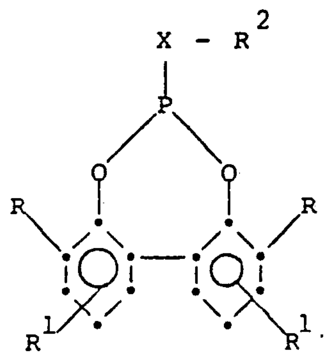

(I)

worin X Sauerstoff oder Schwefel ist, und R $C_1$—$C_{18}$ Alkyl, $R^1$ Wasserstoff oder $C_1$—$C_{18}$ Alkyl und $R^2$ $C_1$—$C_{18}$ Alkyl, Phenyl, mit 1 bis 3 Alkylgruppen substituiertes Phenyl, wobei die Alkylgruppen 1 bis 8 C-Atome enthalten, oder eine Gruppe der Formel

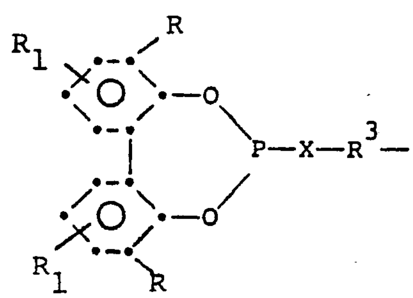

bedeutet,

worin $R^3$ Alkylen, Arylen oder Allylen ist, und die übrigen Symbole die oben angegebene Bedeutung haben.

R ist vorzugsweise ein geradkettiges oder verzweigtes Alkyl mit 1 bis 8 C-Atomen, z.B. Methyl, Aethyl, n-Propyl, i-Propyl, n-Butyl, sec.-Butyl, t-Butyl, 2-Aethylhexyl, n-Octyl und t-Octyl. $\alpha$-Verzweigte Alkyl-Radikale mit 3 bis 8 C-Atomen sind bevorzugt. Besonders bevorzugt ist t-Butyl und t-Octyl (t-Octyl = 1,1,3,3-Tetramethylbutyl).

Ebenfalls besonders bevorzugt ist, wenn $R^1$ zu Sauerstoff in p-Stellung steht und t-Alkyl bedeutet.

$R^1$ kann Wasserstoff oder $C_1$—$C_{18}$ Alkyl bedeuten. Bevorzugt ist ein geradkettiges oder verzweigtes Alkyl mit 1 bis 8 C-Atomen, z.B. Methyl, i-Propyl, t-Butyl, t-Amyl, n-Octyl und t-Octyl. Besonders bevorzugt ist t-Alkyl mit 4 bis 8 C-Atomen, z.B. t-Butyl.

$R^2$ kann $C_1$—$C_{18}$ Alkyl sein, z.B. Methyl, Aethyl, Butyl, Hexyl, Heptyl, Octyl, Decyl, Dodecyl, Hexadecyl, Octadecyl, etc., oder kann Phenyl oder Alkyl-substituiertes Phenyl bedeuten, wie Tolyl, Xylyl,

Mesityl, Aethylphenyl, Butylphenyl, 3,5-Dibutylphenyl, p-Octylphenyl, 3,5-Dioctylphenyl. Bevorzugt ist $R^2$ eine Phenylgruppe, welche mindestens eine verzweigte Alkylgruppe trägt. Besonders bevorzugt ist $R^2$ 2-t.Butylphenyl, 2,4-Di-t.butylphenyl, 2,4,6-Tri-t.butylphenyl, 2-t.Butyl-5-methylphenyl, 2-t.Butyl-4-methylphenyl, 2,6-Di-t.butylphenyl, 2,6-Di-t.butyl-4-methylphenyl, 2,4-Di-t.Amylphenyl oder 2,4-Di-t.octylphenyl.

$R^3$ ist bevorzugt geradkettiges oder verzweigtes $C_1$—$C_{12}$ Alkylen oder $C_6$—$C_{30}$ Arylen.

In bevorzugter Verbindung ist $R^3$ als Alkylen solches mit 2 bis 6 C-Atomen, wie beispielsweise Aethylen, 1,2-Propylen, Trimethylen, 1,3-Butylen, Tetramethylen, Pentamethylen oder Hexamethylen.

Ist $R^3$ Arylen, so kann es sich um substituiertes oder unsubstituiertes Arylen handeln. Als Substituenten kommen 1 bis 4 Alkylgruppen mit jeweils 1 bis 8, bevorzugt 1 bis 4 C-Atomen in Frage. Als Beispiele sind zu nennen: Phenylen, Tolylen, 1,3,5-Trimethylphenylen, 1,2,4,5-Tetramethylphenylen oder 2,5-Di-t.butylphenylen. Bei Arylen kann es sich auch um mehrkernige Arylengruppen handeln, wie Biphenylene, Methylendiphenylen, Isopropylendiphenylen oder Pentacosylendiphenylen.

Die besonders bevorzugte Bedeutung von $R^3$ ist $C_2$—$C_6$ Alkylen, Phenylen oder mit 1 bis 2 Alkylgruppen mit je 1 bis 4 C-Atomen substituiertes Phenylen.

Die Verbindungen der vorliegenden Erfindung können nach an sich bekannten Methoden hergestellt werden, z.B. aus den entsprechenden 2,2'-Biphenolen mit Phosphortrichlorid, z.B. in einem Lösungsmittel. Die so erhaltenen 2,2'-Biphenylen-phosphorochloridite können anschliessend mit Alkalimetallalkoholaten bzw.-phenolaten der Formel M—$XR^2$, worin M Alkalimetall ist und X und $R^2$ die oben angegebene Bedeutung haben, umgesetzt werden.

Das Lösungsmittel ist vorzugsweise eine aromatische Verbindung, z.B. Benzol, Toluol, Xylol etc. Die Reaktion kann in der Gegenwart oder in der Abwesenheit eines Protonakzeptors, wie ein tertiäres Amin, z.B. Triäthylamin, Pyridin N,N-Dimethylanilin etc. ausgeführt werden. Die Reaktionstemperatur kann im Bereich von Raumtemperatur bis zur Rückflusstemperatur des jeweiligen Lösungsmittels liegen.

In einer Verfahrensvariante besteht der zweite Schritt in einer Umsetzung des entsprechenden Phosphorochloridits mit einem Alkohol oder Phenol der Formel $HXR^2$, worin X und $R^2$ die oben angegebene Bedeutung haben, in Gegenwart eines Protonenacceptors wie einem tertiären Amin, z.B. Triäthylamin oder Pyridin.

Die Verbindungen der vorliegenden Erfindung sind wirksame Antioxydantien und Lichtschutzmittel für eine grosse Anzahl von organischen Polymeren. Beispiele für solche Polymeren sind:

1. Polymere, die sich von Mono- und Diolefinen ableiten, wie Polyaethylen, das gegebenenfalls vernetzt sein kann, Polypropylen, Polyisobutylen, Polymethylbuten-1, Polymethylpenten-1, Polyisopren, Polybutadien.
2. Mischungen der unter 1 genannten Homopolymeren, wie z.B. Gemische von Polypropylen und Polyäthylen, Polypropylen und Polybuten-1, Polypropylen und Polyisobutylen.
3. Copolymere der dem unter 1 genannten Homopolymeren zugrundeliegenden Monomeren, wie Aethylen-Propylen-Copolymere, Propylen-Buten-1-Copolymere, Propylen-Isobutylen-Copolymere, Aethylen-Buten-1-Copolymere, sowie Terpolymere von Aethylen und Propylen mit einem Dien, wie z.B. Hexadien, Dicyclopentadien oder Aethylidennorbornen.
4. Polystyrol und seine Copolymeren, wie SAN, ABS, IPS, ASA und EP modifizierte Styrolcopolymerisate.
5. Halogenhaltige Vinyl-Polymere.
6. Polyurethane.
7. Polycarbonate.
8. Polyamide.
9. Polyester.
10. Polyacrylate, Polymethacrylate, Polyacrylamide und Polyacrylnitrile.
11. Polyacetale.

Beispiele für Substrate, welche mit Hilfe der Verbindungen der Formel I stabilisiert werden können, sind z.B. in der DE—OS Nr. 2 456 864 beschrieben.

Die Verbindungen der vorliegenden Erfindung sind besonders wirksam als Stabilisatoren für organische Stoffe, wie z.B. Kunststoffe, Polymere, Harze sowie Erdöl und synthetische Flüssigkeiten, wie Schmieröle und Zirkulationsöle etc.

Die erfindungsgemässen Verbindungen eignen sich insbesondere für das Stabilisieren von Polyolefinen, wie z.B. Polyäthylen, Polypropylen, Polybuten-1, Polypenten-1, Poly(3-methylbuten-1), Poly(4-methylpenten-1), verschiedene Aethylen-Propylen-Copolymere usw.

Andere Substrate, in denen die erfindungsgemässen Verbindungen besonders wirksam sind, sind Polystyrol, incl. schlagfestes Polystyrol, ABS, SBR, Polyisopren sowie Kautschuk, Polyester incl. Polyäthylenterephthalat und Polybutylenterephthalat sowie ihre Copolymere. Weiterhin können auch Polyurethane, Polycarbonate, Polyamide wie Nylon 6, 6/6 und ähnliche sowie Copolyamide stabilisiert werden.

Die Verbindungen der vorliegenden Erfindung können entweder als Antioxydantien oder als Lichtschutzmittel verwendet werden oder sie können gleichzeitig beide Funktionen ausüben. Die Stabilisatoren können gegebenenfalls mit anderen Zusätzen kombiniert werden, wie phenolische Antioxydantien, Gleitmittel wie Ca-stearat, Pigmente, Farbstoffe, UV-Absorber, sterisch gehinderte Amine als Lichtschutzmittel, Metalldesaktivatoren, Talk und andere Füllstoffe.

Im allgemeinen werden die erfindungsgemässen Stabilisatoren in 0,01 bis 5 Gew.-%, bezogen auf den stabilisierten Kunststoff, verwendet, wobei die Menge je nach Substrat und Anwendung verschieden sein kann. Bevorzugt ist 0,05 bis 2 Gew.-%, besonders bevorzugt ist 0,1 bis 1 Gew.-%.

Die mit den erfindungsgemässen Verbindungen stabilisierten Kunststoffe zeichnen sich durch relativ geringe Verfärbung bei der Verarbeitung bei hohen Temperaturen aus. Die Verfärbung ist auch dann noch gering, wenn das Polymer mehrmals extrudiert wird. Polymere, die diese Eigenschaft besonders deutlich zeigen sind: Polypropylen, Polyäthylen, Styrol-Copolymeren, wie ABS, Polyäthylen- und Polybutylenterephthalat, Polycarbonat, Kautschuk, synthetische Elastomere wie SBR.

Die erfindungsgemässen Stabilisatoren sind auch in Abwesenheit von Co-Stabilisatoren, wie phenolische Antioxydantien, wirksam für Polyolefine, ganz im Gegensatz zu zahlreichen Verbindungen, die üblicherweise verwendet werden.

Viele Verbindungen der vorliegenden Erfindung besitzen nebst verarbeitungsstabilisierender auch lichtstabilisierende Wirkung. Letztere ist besonders wichtig für Kunstfasern, deren Verarbeitungstemperaturen extrem hoch liegen und deren Lichtstabilität Hauptanforderung ist.

Eine besonders wichtige Eigenschaft der Phosphor-(III)-ester ist, dass sie weder hygroskopisch noch hydrolyseempfindlich in Gegenwart von Luftfeuchtigkeit während der Lagerung sind. Die hygroskopische Eigenschaft erschwert das gleichmässige Einarbeiten des Stabilisators in das Polymer. Letzteres wird klebrig und klumpig während des Vermischens. Die Hydrolyse während der Lagerung bewirkt, dass die Phosphorester-Stabilisatoren and Wirksam — keit verlieren.

Die Verbindungen der Formel I können mühelos mit den üblichen Methoden in das organische Polymer eingearbeitet werden, und zwar in jeder beliebigen Phase während der Herstellung von Formstücken.

Das erfindungsgemäss stabilisierte Polymer kann weitere Additive, wie folgt, enthalten: UV-Absorber und Lichtschutzmittel, wie 2-(2′-Hydroxyphenyl)-benztriazole, 2,4-Bis-(2′-hydroxyphenyl)-6-alkyl-s-triazine, 2-Hydroxybenzophenone, 1,3-Bis-(2′-hydroxybenzoyl)-benzole, Ester von gegebenenfalls substituierten Benzoesäuren, Acrylate, des weiteren Nickelverbindungen, sterisch gehinderte Amine, Oxalsäurediamide, Metalldesaktivatoren, Phosphite, peroxidzerstörende Verbindungen, Polyamidstabilisatoren, basische Co-Stabilisatoren, Nukleierungsmittel oder sonstige Zusätze, wie z.B. Weichmacher, Gleitmittel, Emulgatoren, Füllstoffe, Russ, Asbest, Kaolin, Talk, Glasfasern, Pigmente, optische Aufheller, Flammschutzmittel, Antistatica oder Antioxidantien.

Als Beispiele für Antioxidantien sind hervorzuheben:

1. *Einfache 2,6-Dialkylphenole*, wie z.B. 2,6-Di-tert.butyl-4-methylphenol, 2,6-Di-tert.butyl-4-methoxymethylphenol oder 2,6-Di-tert.-butyl-4-methoxyphenol.

2. *Bisphenole*, wie z.B. 2,2′ - Methylenbis - (6 - tert.butyl - 4 - methylphenol), 2,2′ - Methylenbis-(6 - tert.butyl - 4 - äthylphenol), 2,2′ - Methylenbis - [4 - methyl - 6 - ($\alpha$ - methylcyclohexyl) - phenol], 1,1 - Bis(5 - tert.butyl - 4 - hydroxy - 2 - methylphenyl) - butan, 2,2 - Bis - (5 - tert.butyl - 4 - hydroxy-2 - methylphenyl) - butan, 2,2 - Bis - (3,5 - di - tert.butyl - 4 - hydroxyphenyl) - propan, 1,1,3 - Tris - (5-tert.butyl - 4 - hydroxy - 2 - methylphenyl) - butan, 2,2 - Bis - (5 - tert.butyl - 4 - hydroxy - 2 - methylphenyl) - 4 - n - dodecylmercapto - butan, 1,1,5,5 - Tetra - (5 - tert.butyl - 4 - hydroxy - 2 - methylphenyl) - pentan, Aethylenglykolbis - [3,3 - bis - (3′ - tert.butyl - 4′ - hydroxyphenyl) - butyrat], 1,1 - Bis-(3,5 - dimethyl - 2 - hydroxyphenyl) - 3 - (n - dodecylthio) - butan oder 4,4′ - Thiobis(6 - tert.butyl-3 - methylphenol).

3. *Hydroxybenzyl-Aromaten*, wie z.B. 1,3,5 - Tri - (3,5 - di - tert.butyl - 4 - hydroxybenzyl) - 2,4,6-trimethylbenzol; 2,2 - Bis - (3,5 - di - tert.butyl - 4 - hydroxybenzyl) - malonsäure - dioctadecylester; 1,3,5 - Tris - (3,5 - di - tert.butyl - 4 - hydroxybenzyl) - isocyanurat oder 3,5 - Di - tert.butyl - 4-hydroxybenzyl - phosphonsäurediäthylester.

4. *Amide der $\beta$ - (3,5 - Di - tert.butyl - 4 - hydroxyphenyl) - propionsäure*, wie z.B. 1,3,5 - Tris-(3,5 - di - tert.butyl - 4 - hydroxyphenyl - propionyl) - hexahydro - s - triazin, N,N′ - Di - (3,5 - di-tert.butyl - 4 - hydroxyphenyl - propionyl) - hexamethylendiamin.

5. *Ester der $\beta$ - (3,5 - Di - tert.butyl - 4 - hydroxyphenyl) - propionsäure* mit ein- oder mehrwertigen Alkoholen, wie z.B. mit Methanol, Octadecanol, 1,6-Hexandiol, Aethylenglykol, Thiodiäthylenglykol, Neopentylglykol, Pentaerythrit, Tris-hydroxyäthyl-isocyanurat.

6. *Spiroverbindungen* wie z.B. diphenolische Spiro-di-acetale oder-diketale, wie z.B. in 3-, 9-Stellung mit phenolischen Resten substituiertes 2,4,8,10-Tetraoxaspiro-[5,5]-undecan, wie z.B. 3,9-Bis - (3,5 - di - tert.butyl - 4 - hydroxyphenyl) - 2,4,8,10 - tetraoxaspiro - [5,5] - undecan, 3,9 - Bis-[1,1 - dimethyl - 2(3,5 - ditert.butyl - 4 - hydroxyphenyl) - äthyl] - 2,4,8,10 - tetraoxaspiro - [5,5]-undecan.

Ferner kann es Thiosynergisten, wie Dilauryl-thiodipropionat oder Distearyl-thiodipropionat enthalten.

Beispiel 1

45,21 g Phosphortrichlorid in 50 ml Toluol wurden während 85 Minuten zu einer Lösung bestehend aus 123.0 g 4,4',6,6'-Tetra-t.butyl-2,2'-biphenol und 60,6 g Triäthylamin in 600 ml Toluol zugetropft und die Reaktionsmischung bei Raumtemperatur während 20 Stunden gerührt. Das Triäthylaminhydrochlorid wurde abfiltriert und das Lösungsmittel abdestilliert. Das so erhaltene (4,4',6,6'-Tetra-t.butyl-2,2'-bisphenylen)phosphorochloridit besitzt einen Schmelzpunkt von 168 bis 174°C.

Elementaranalyse: % Cl gef. 7,50
ber. 7,46

Beispiel 2

4,85 g einer 46,3%-igen wässrigen Kaliumhydroxidlösung wurde zu 8,24 g 2,4-Di-t.butylphenol in 250 ml Toluol zugegeben und das Gemisch während 2 Stunden bei Rückflusstemperatur gehalten, wobei alles Wasser durch azeotrope Destillation weggetrennt wird. Zum so erhaltenen Phenolat wurde bei bis −5°C eine Lösung von 21,7 g des Produkts aus Beispiel 1 in 60 ml Toluol (−5 bis −3°C) während 25 Minuten zugetropft und das Gemisch während 15 Stunden gerührt. Nach Filtrieren wurde das Lösungsmittel abdestilliert und das gewünschte Produkt aus Acetonitril/Toluol auskristallisiert. (2,4-Di-t.butylphenyl)-(4,4',6,6-tetra-t.butyl-2,2'-biphenylen)-phosphit besitzt einen Schmelzpunkt von 195 bis 197°C.

Elementaranalyse: % C gef. 78,56
ber. 78,22

& H gef. 9,86
ber. 9,53

Beispiel 3

Die Umsetzung von entsprechenden Mengen an (4,4',6,6'-Tetra-t.butyl-2,2'-biphenylen)-phosphorochloridit und Kalium-2,6-di-t.butyl-4-methylphenolat liefert bei in Beispiel 2 beschriebenem Vorgehen (2,6-Di-t.butyl-4-methylphenyl)-(4,4',6,6'-tetra-t.butyl-2,2'-biphenylen)phosphit mit einem Schmelzpunkt von 152 bis 155°C.

Beispiel 4

Analog zu Beispiel 2 wurde (2,4,6-Tri-t.butyl-phenyl)-(4,4',6,6'-Tetra-t.butyl-2,2'-biphenylen)phosphit mit einem Schmelzpunkt von 210 bis 212°C hergestellt.

Beispiel 5

Eine Lösung von 23,75 g Chloridit aus Beispiel 1 in 80 ml Toluol wurden zu 3 g Isopropanol und 50,5 g Triäthylamin bei 15 bis 20°C zugetropft und die Reaktionsmischung während mehreren Stunden gerührt. Nach Filtrieren und Abdestillieren der Lösungsmittel wurde das (Isopropyl)-4,4',6,6'-tetra-t.butyl-2,2'-biphenylen)phosphit aus Isopropanol umktristalliert. Schmelzpunkt: 154 bis 156°C.

Elementaranalyse: % C gef. 74,34
ber. 74,66

% H gef. 9,73
ber. 9,42

Beispiel 6

Bei analogem Vorgehen wie in Beispiel 2, erhält man durch Umsetzung von 2 Mol (4,4',6,6'-Tetra-t.butyl-2,2'-biphenylen)phosphorochloridit (Beispiel 1) mit 1 Mol 1,3-Propandithiol, in Gegenwart von Triäthylamin, S,S'-(Trimethylen)-bis-[0,0'(4,4',6,6'-tetra-t.butyl-2,2'-diphenylen)thiophosphit] mit einem Schmelzpunkt von 190 bis 193°C.

Beispiel 7

Analog dem in Beispiel 5 beschriebenen Verfahren wurde 0,0'-[methylen-bis-(2,6-di-t.butyl-phenylen]-bis-[(4,4',6,6'-tetra-t.butyl-2,2'-biphenylen)phosphit].

Beispiel 8

n-Octadecyl-(4,4',6,6'-tetra-t.butyl-2,2'-biphenylen)phosphit mit einem Schmelzpunkt von 38 bis 41°C wurde analog Beispiel 5 hergestellt.

Beispiele 9 bis 16

Analog Beispiel 5 wurden folgende Verbindungen der Formel I hergestellt:

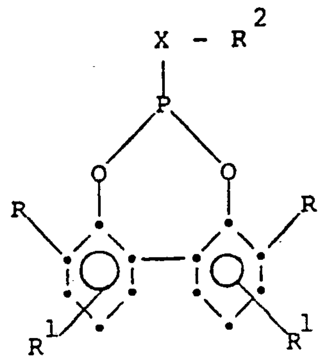

| Bsp | R | $R^1$ | $XR^2$ |
|---|---|---|---|
| 9 | $-C(CH_3)_3$ | $(4)-C(CH_3)_3$ | $-OCH_3$ |
| 10 | $-C_8H_{17}$ | $(4)-CH_3$ | $-OC_{18}H_{37}$ |
| 11 | $-C(CH_3)_3$ | $(4)-C(CH_3)_3$ | 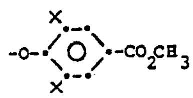 |
| 12 | $-C(CH_3)_3$ | $(5)-CH_3$ | $-OC_8H_{17}$ |
| 13* | $-C(CH_3)_3$ | $(4)-C(CH_3)_3$ | 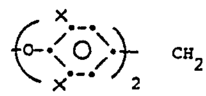 |
| 14* | $-C(CH_3)_3$ | $(4)-C(CH_3)_3$ | 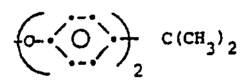 |
| 15* | $-C(CH_3)_3$ | $(4)-C(CH_3)_3$ | $-OCH_2-C(CH_3)_2-CH_2-O-$ |
| 16 | $-C(CH_3)_3$ | $(4)-C(CH_3)_3$ | $-SC_8H_{17}$ |

*Diphosphite.

Beispiel 17

*Verarbeitungsstabilität von Polypropylen bei 260°C*

| | | |
|---|---|---|
| Ansatz: | Profax 6801 | 100 Teile |
| | Ca-stearat | 0,1 Teile |

Die Stabilisatoren werden in Form von Methylenchlorid-Lösungen in das Polypropylen gemischt. Nach Entfernen des Lösungsmittels durch Einengen im Vakuum, extrudiert man das Harz unter folgenden Bedingungen:

| bei 100 UPM | Temperatur (°C) |
|---|---|
| Zylinder Nr. 1 | 232 |
| Zylinder Nr. 2 | 246 |
| Zylinder Nr. 3 | 260 |
| Gussform Nr. 1 | 260 |
| Gussform Nr. 2 | 260 |

Der interne Druck wird durch einen Druckumwandler während der Extrusion bestimmt. Jeweils nach der 1., 3. und 5. Extrusion werden die Harzpellets zu 3,2 mm dicken Spritzgussplatten bei 193°C geformt. Die Vergilbung wird durch Messung des Yellowness Index nach ASTM D 1925—63T beurteilt.

Der Schmelzindex wird nach ASTM Methode 1238, Kondition L bestimmt. Der Schmelzindex ist direkt abhängig vom Umwandlerdruck und beide sind ein Mass für das MolGewicht eines bestimmten Polymertyps. Die Ergebnisse folgen in Tabelle I.

TABELLE 1

Verarbeitungsstabilität von Polypropylen bei 260°C

| Gew-% Additiv aus Bsp. Nr. | Umwandlerdruck ($kp/cm^2$) nach Extrusion | | | ** MFR (g/10 Min) nach Extrusion | | | *** YL Farbe nach Extrusion | | |
|---|---|---|---|---|---|---|---|---|---|
| | 1 | 3 | 5 | 1 | 3 | 5 | 1 | 3 | 5 |
| keines | 76,99 | 59,06 | 46,05 | 0,73 | 2,01 | 4,25 | 4,6 | 6,5 | 7,9 |
| 0,1 A | 85,42 | 73,47 | 65,39 | 0,42 | 1,04 | 1,25 | 6,7 | 8,6 | 10,5 |
| 0,15 A | 89,29 | 78,04 | 69,60 | 0,40 | 0,78 | 1,06 | 7,8 | 10,3 | 12,5 |
| 0,1 A+0,05 Nr. 2 | 88,59 | 79,10 | 72,77 | | | | 5,9 | 7,4 | 9,9 |
| 0,1 A+0,05 Nr. 3 | 87,88 | 75,93 | 71,71 | | | | 5,9 | 8,0 | 9,3 |
| 0,1 A+0,05 Nr. 4 | 86,48 | 78,74 | 71,01 | | | | 6,1 | 8,6 | 10,3 |
| 0,1 A+0,05 Nr. 5 | 97,02 | 89,64 | 84,36 | | | | 4,8 | 8,1 | 7,8 |
| 0,1 A+0,05 Nr. 8 | 94,91 | 88,59 | 82,26 | | | | 5,3 | 7,1 | 9,0 |
| 0,1 A+0,05 Nr. 9 | 93,86 | 88,59 | 84,36 | 0,19 | 0,24 | 0,36 | 5,4 | 6,6 | 8,5 |
| 0,1 A+0,05 Nr. 6 | 93,86 | 88,59 | 86,48 | 0,19 | 0,25 | 0,34 | 5,9 | 6,7 | 8,2 |
| 0,1 A+0,05 Nr. 15 | 96,67 | 89,64 | 86,48 | 0,20 | 0,24 | 0,31 | 5,7 | 7,1 | 8,1 |
| 0,1 A+0,05 Nr. 11 | 87,53 | 81,20 | 75,93 | 0,27 | 0,38 | 0,56 | 5,9 | 7,4 | 8,5 |

A: Pentaerithritol-tetratis-[3-(3',5'-di-t.butyl-4'-hydroxyphenyl)propionat].

**: Melt flow rate.

***: Yellowness Index.

**Patentansprüche**

1. Verbindungen der Former I

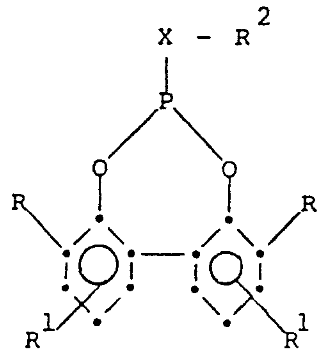

worin X Sauerstoff oder Schwefel ist und R $C_1$—$C_{18}$ Alkyl, $R^1$ Wasserstoff oder $C_1$—$C_{18}$ Alkyl und $R^2$ $C_1$—$C_{18}$ Alkyl, Phenyl, mit 1 bis 3 Alkylgruppen substituiertes Phenyl, wobei die Alkylgruppen 1 bis 8 C-Atome enthalten, oder eine Gruppe der Formel

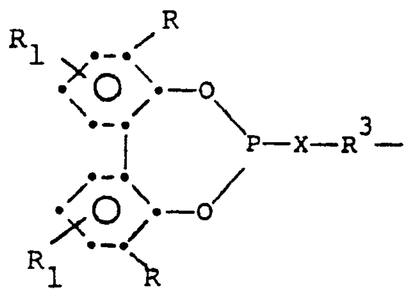

bedeutet,

worin $R^3$ Alkylen, Arylen oder Allylen ist, und die übrigen Symbole die oben angegebene Bedeutung haben.

2. Verbindungen nach Anspruch 1 der Formel I, worin R eine $\alpha$-verzweigte $C_3$—$C_8$ Alkylgruppe, $R^1$ $C_1$—$C_8$ Alkyl und $R^2$ mit mindestens einer verzweigten Alkylgruppe substituiertes Phenyl bedeutet.

3. Verbindungen nach Anspruch 1 der Formel I, worin $R^1$ in meta-Stellung zu R steht.

4. Verbindungen nach Anspruch 1 der Formel I, worin R t.Butyl oder t.Octyl ist, und $R^1$ t Alkyl mit 4 bis 8 C-Atomen bedeutet, und $R^2$ 2-t.Butylphenyl, 2,4-Di-t.butylphenyl, 2,4,6-Tri-t.butylphenyl, 2-t.Butyl-5-methylphenyl, 2-t.Butyl-4-methylphenyl, 2,6-Di-t.butylphenyl, 2,6-Di-t.butyl-4-methylphenyl, 2,4-Di-t-amylphenyl oder 2,4-Di-t.octylphenyl bedeutet.

5. Verbindungen nach Anspruch 1, worin $R^2$ eine Gruppe der Formel

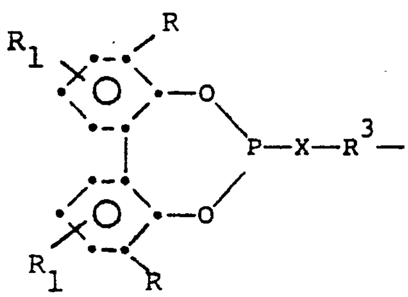

ist, worin X Sauerstoff ist, und $R^3$ geradkettiges oder verzweigtes $C_1$—$C_{12}$ Alkylen oder $C_6$—$C_{30}$ Arylen bedeutet.

6. S,S' - (Trimethylen) - bis - [0,0' - (4,4'6,6' - tetra - t.butylphenyl - 2,2' - biphenylen) - thio - phosphit] gemäss Anspruch 1.

7. (Methyl)-(4,4'6,6'-tetra-t.butyl-2,2'-biphenylen) phosphit gemäss Anspruch 1.

8. Organisches Material enthaltend eine Verbindung der Formel I nach Anspruch 1.

9. Organisches Polymer enthaltend eine Verbindung der Formel I nach Anspruch 1.

10. Homo- oder co-polymeres Polyolefin enthaltend eine Verbindung der Formel I nach Anspruch 1.

**Claims**

1. A compound of the formula I

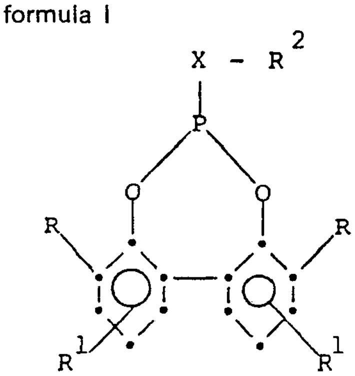

wherein X is oxygen or sulfur, R is $C_1$—$C_{18}$-alkyl, $R^1$ is hydrogen or $C_1$—$C_{18}$-alkyl, and $R^2$ is $C_1$—$C_{18}$-alkyl, phenyl, phenyl substituted by 1 to 3 alkyl groups each having 1 to 8 C atoms, or a group of the formula

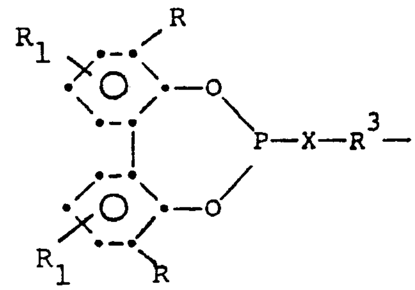

wherein $R^3$ is alkylene, arylene or allylene, and the other symbols have the meanings given above.

2. A compound according to Claim 1 of the formula I wherein R is an $\alpha$-branched $C_3$-$C_8$-alkyl group, $R^1$ is $C_1$-$C_8$-alkyl, and $R^2$ is phenyl substituted by at least one branched-chain alkyl group.

3. A compound according to Claim 1 of the formula I wherein $R^1$ is in the meta-position with respect to R.

4. A compound according to Claim 1 of the formula I wherein R is a tert-butyl or tert-octyl, $R^1$ is tert-alkyl having 4 to 8 C atoms, and $R^2$ is 2-tert-butylphenyl, 2,4-di-tert-butylphenyl, 2,4,6-tri-tert-butylphenyl, 2-tert-butyl-5-methylphenyl, 2-tert-butyl-4-methylphenyl, 2,6-di-tert-butylphenyl, 2,6-di-tert-butyl-4-methylphenyl, 2,4-di-tert-amylphenyl or 2,4-di-tertoctylphenyl.

5. A compound according to Claim 1, wherein $R^2$ is a group of the formula

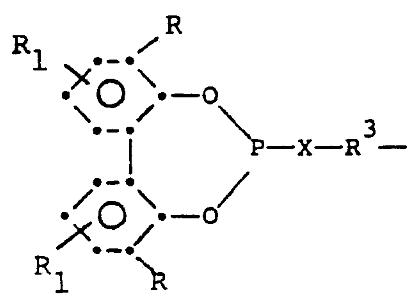

wherein X is oxygen, and $R^3$ is straight-chain or branched-chain $C_1$—$C_{12}$-alkylene or $C_6$—$C_{30}$-arylene.

6. S,S′ - (Trimethylene) - bis - [0,0 - (4,4′,6,6′ - tetra - tert - butylphenyl - 2,2′ - biphenylene) - thiophosphite] according to Claim 1.

7. (Methyl)-(4,4′,6,6′-tetra-tert-butyl-2,2′-biphenylene)- phosphite according to Claim 1.

8. Organic material containing a compound of the formula I according to Claim 1.

9. An organic polymer containing a compound of the formula I according to Claim 1.

10. A homo- or co-polymeric polyolefin containing a compound of the formula I according to Claim 1.

**Revendications**

1. Composés répondant à la formule I

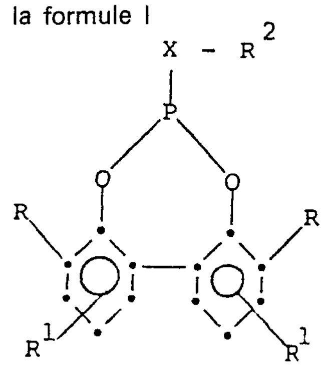

dans laquelle
X représente l'oxygène ou le soufre,
R représente un alkyle en $C_1$—$C_{18}$,
$R^1$ représente l'hydrogène ou un alkyle en $C_1$—$C_{18}$ et
$R^2$ représente un alkyle en $C_1$—$C_{18}$, un phényle, un phényle porteur de 1 à 3 radicaux alkyles contenant chacun de 1 à 8 atomes de carbone, ou représente un radical de formule:

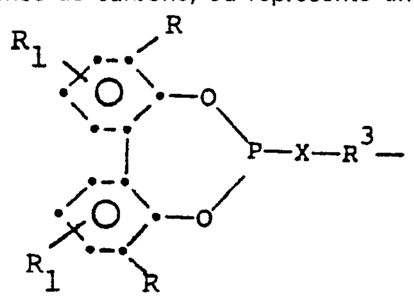

dans lequel $R^3$ représente un radical alkylène, arylène ou allylène et les autres symboles ont les significations précédemment données.

2. Composés de formule I selon la revendication 1 dans lesquels R représente un radical alkyle en $C_3$—$C_8$ ramifié en $\alpha$, $R^1$ un radical alkyle en $C_1$—$C_8$ et $R^2$ un radical phényle porteur d'au moins un alkyle ramifié.

3. Composés de formule I selon la revendication 1 dans lesquels $R^1$ est en position méta par rapport à R.

4. Composés de formule I selon la revendication I dans lesquels R représente un radical tert-butyle ou tert-octyle, $R^1$ un radical tert-alkyle contenant de 4 à 8 atomes de carbone et $R^2$ un radical tert-butyl-2 phényle, di-tert-butyl-2,4 phényle, tri-tert-butyl-2,4,6 phényle, tert-butyl-2 méthyl-5 phényle, tert-butyl-2 méthyl-4 phényle, di-tert-butyl-2,6 phényle, di-tert-butyl-2,6 méthyl-4 phényle, di-tert-pentyl-2,4 phényle ou di-tert-octyl-2,4 phényle.

5. Composés selon la revendication 1 dans lesquels $R^2$ représente un radical répondant à la formule:

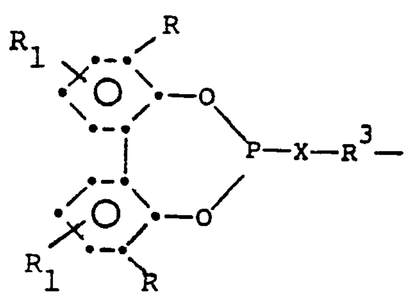

dans laquelle X représente l'oxygène et $R^3$ un radical alkylène en $C_1$-$C_{12}$ linéaire ou ramifié ou un radical arylène en $C_6$-$C_{30}$.

6. Composé selon la revendication 1, en l'espèce le S,S'-triméthylène-bis-[thio-phosphite de O,O'-(tétrakis-tert-butyl-4,4',6,6' biphénylylène2,2')].

7. Composé selon la revendication 1, en l'espèce le phosphite de méthyle et de tétrakis-tert-butyl-4,4',6,6' biphénylylène-2,2'.

8. Matière organique contenant un composé de formule I selon la revendication 1.

9. Polymère organique contenant un composé de formule I selon la revendication 1.

10. Polyoléfine homopolymère ou copolymère contenant un composé de formule I selon la revendication 1.